# FASCICULE DE BREVET EUROPEEN

(11) **EP 1 029 182 B1**
(45) Date de publication et mention de la délivrance du brevet: **16.04.2003**
(21) Numéro de dépôt: 98954549.6
(22) Date de dépôt: 10.11.1998
(51) Int. Cl.: F16D 3/84, F16J 3/04

(54) **SOUFFLET PROTECTEUR POUR JOINT ARTICULE D'ARBRE DE TRANSMISSION**
SCHUTZFALTENBALG FÜR EIN ANTRIEBSWELLENGELENK
PROTECTIVE BELLOW FOR DRIVE SHAFT ARTICULATED JOINT

(30) Priorité: 12.11.1997 FR 9714399
(43) Date de publication de la demande: 23.08.2000
(73) Titulaire: Yamajany (S.A.R.L.), 13008 Marseille (FR)
(72) Inventeur: MERSCH, Patrick, F-13008 Marseille (FR); LAGIER, Bernard, F-13008 Marseille (FR)
(74) Mandataire: Roman, Michel
(86) Numéro de dépôt international: FR9802396
(87) Numéro de publication internationale: WO99024729

(56) Documents cités:
- WO-A-96/23143
- DE-A- 19 601 096
- FR-A- 2 029 829
- US-A- 3 793 892
- US-A- 4 629 641

## Description

La présente invention a pour objet un soufflet protecteur pour joint articulé d'arbre de transmission. (Voir par exemple le document WO 96/23143).

Il est destiné à être disposé autour des joints lubrifiés de type "cardan" ou homocinétiques utilisés pour transmettre un mouvement de rotation à des organes mobiles, en particulier dans le domaine des véhicules routiers automobiles et concerne avant tout le secteur industriel de la fabrication de pièces de rechange pour ateliers de réparation et de maintenance des voitures ou poids lourds.

Ces dispositifs ont deux fonctions essentielles. D'une part, ils servent à protéger les joints et articulations contre les corps étrangers, chocs et autres éléments extérieurs et, d'autre part, à contenir de manière étanche la masse lubrifiante dont le joint articulé a besoin pour durer. Ces soufflets sont soumis à des déformations constantes, en longueur et en inclinaison, tout en étant soumis à des rotations de vitesse très variable.

Ils sont généralement constitués d'une gaine tubulaire conique en élastomère souple, habituellement moulée en une seule pièce, formé d'une partie centrale avec ondulations permettant la flexion et l'extension axiale du corps, et de deux extrémités comportant l'une et l'autre des zones de fixations cylindriques avec un diamètre intérieur permettant leur raccordement sur les éléments correspondants du joint articulé.

Le maintien et l'étanchéité sont le plus souvent assurés au moyen de colliers de serrage destinés à être montés aux deux extrémités des soufflets dans des gorges prévues à cet effet. Après mise en place du soufflet, ces colliers sont positionnés aux emplacements adéquats et serrés à l'aide d'un outil à fonctionnement manuel ou mécanique. Afin d'éviter le démontage de l'organe de transmission, la mise en place des soufflets, en particulier pour le remplacement des pièces défaillantes, est souvent réalisée à l'aide d'un cône creux rigide dont la base est appliquée contre le "bol" (élément de plus grand diamètre) du joint articulé, et sur lequel la gaine est glissée en forçant de manière à provoquer un étirement radial suffisant pour positionner son extrémité la plus large sur la périphérie dudit "bol", et l'extrémité de plus faible diamètre sur l'arbre de transmission. Arrivée à l'extrémité du cône, la gaine se rétracte brutalement pour se positionner du bon côté du bol.

La durée de ces opérations peut être relativement importante en raison, en particulier, de la difficulté d'accès aux organes de transmission. En outre, la force de serrage appliquée aux colliers n'est généralement pas vérifiée, ce qui, en cas de valeur incorrecte, peut entraîner une diminution de la fiabilité du montage. Un serrage trop énergique risque d'entamer la paroi du soufflet et provoquer une déchirure au bout d'un certain temps, un serrage insuffisant pouvant être la cause d'un glissement ou déboîtement de la protection risquant d'entraîner des dégâts graves par perte de graisse.

Ces contraintes, ainsi que la nécessité de disposer d'un outillage spécifique, réserve bien sûr ce travail à des mécaniciens spécialisés. Pour un travail optimal, il est en effet nécessaire de disposer de cônes de pose, ou de bagues d'extension de diamètres différents.

Quelle que soit par ailleurs la qualité du montage, la matière lubrifiante contenue dans le soufflet a tendance, sous l'effet des mouvements du soufflet, de la chaleur dégagée par les roulements et de la force centrifuge, à s'écarter des parties du joint proches de l'axe de rotation, ce qui, en cas de fuite ou de mauvais remplissage, peut compromettre sérieusement le fonctionnement ou la durée du dispositif.

L'invention a pour objectif de faciliter suffisamment la mise en place d'un soufflet de protection pour permettre à un amateur bricoleur de le monter lui-même. Il garantit en outre une excellente lubrification du joint articulé, ainsi qu'une parfaite étanchéité de la gaine grâce à un serrage correct des zones de fixation.

Le dispositif est constitué d'un soufflet conique dont l'extrémité de petit diamètre est expansible et présente une section en dents de scie prolongées axialement par des plis de manière à pouvoir s'étendre radialement sans efforts pour permettre la mise en place du soufflet par-dessus le "bol" du joint articulé sans outillage, la partie centrale pouvant avantageusement comporter une ou plusieurs nervures internes hélicoïdales entraînant la graisse contenue dans le dispositif vers l'articulation lorsque celle-ci est en rotation.

Sur les dessins annexés, donnés à titre d'exemples non limitatifs de formes de réalisation de l'objet de l'invention:
la figure 1 représente, vu de côté, un soufflet tel qu'il est fabriqué,
la figure 2 montre le même soufflet vu en bout du côté de l'extrémité de plus faible diamètre,
les figure 3 et 4 représentent dans les mêmes conditions un soufflet tel qu'il apparaît après serrage de l'extrémité de petit diamètre sur l'arbre d'entraînement du joint articulé,
la figure 5 est une vue en-bout de l'extrémité expansible étendue au maximum,
la figure 6 est une vue de côté d'un soufflet monté sur un joint articulé,
les figures 7 et 8 sont des coupes axiales selon les flèches F-F de la figure 4 de deux variantes de soufflets avec nervures hélicoïdales internes,
la figure 9 est une vue partielle de l'extrémité expansible équipée d'un moyen de serrage intégré formé d'une languette moulée en même temps que le soufflet
et la figure 10 est un détail montrant une extrémité de grand diamètre pourvue d'un moyen de serrage intégré formé d'une bague cylindrique retournable moulée également en même temps que le soufflet.

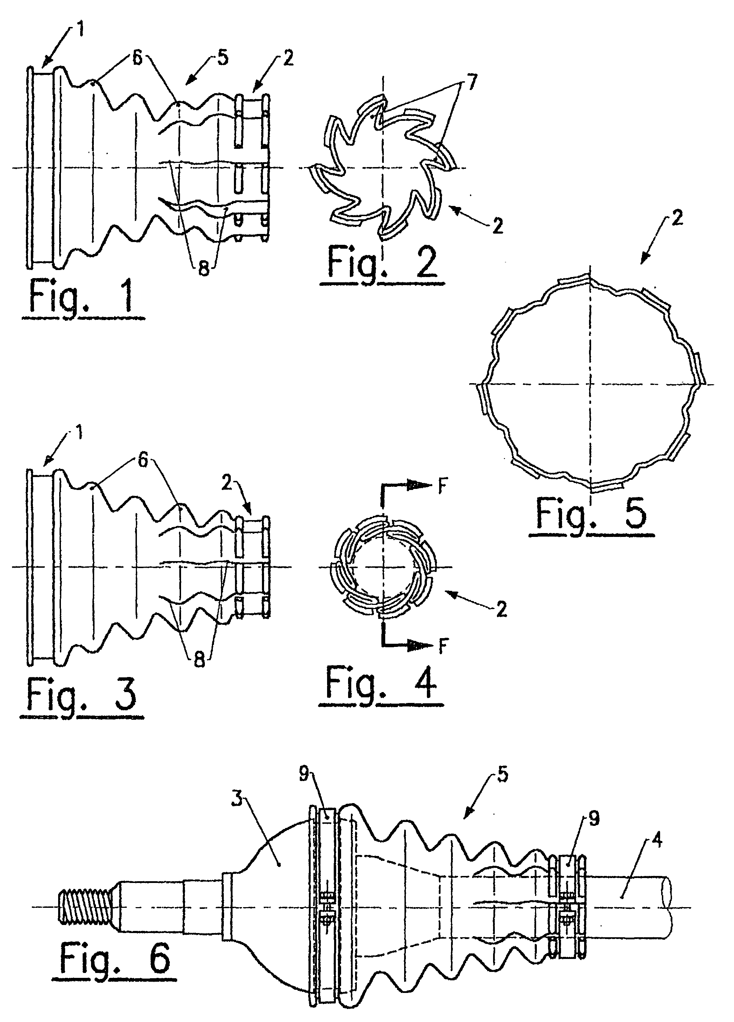

Le dispositif, figures 1 à 10, est constitué d'une gaine ou conique réalisé dans un matériau souple résistant aux lubrifiants, tel que caoutchouc ou élastomère, et comportant trois parties: deux extrémités 1, 2 permettant de fixer de manière étanche ladite gaine respectivement sur l'articulation 3 et sur l'arbre d'entraînement 4 du joint articulé, et un corps central 5 pourvu d'ondulations périphériques 6 permettant sa flexion et des déformations axiales.

Afin de permettre une mise en place facile sans démontage de la transmission, l'extrémité de petit diamètre 2 présente une section extensible radialament en dents de scie 7 prolongées le long d'une partie du corps central 5 par des plis 8 de direction axiale et de section identique mais dégressive. La forme de ces dents et de ces plis est déterminée de façon à ce que la totalité du soufflet puisse être passée sur l'articulation 3 sans efforts lorsque l'extrémité de petit diamètre est déployée et que la-mise en place d'un moyen de serrage tel que collier 9, une fois cette extrémité amenée sur l'arbre d'entraînement 4, fasse se coucher les plis les uns sur les autres et rende l'assemblage étanche.

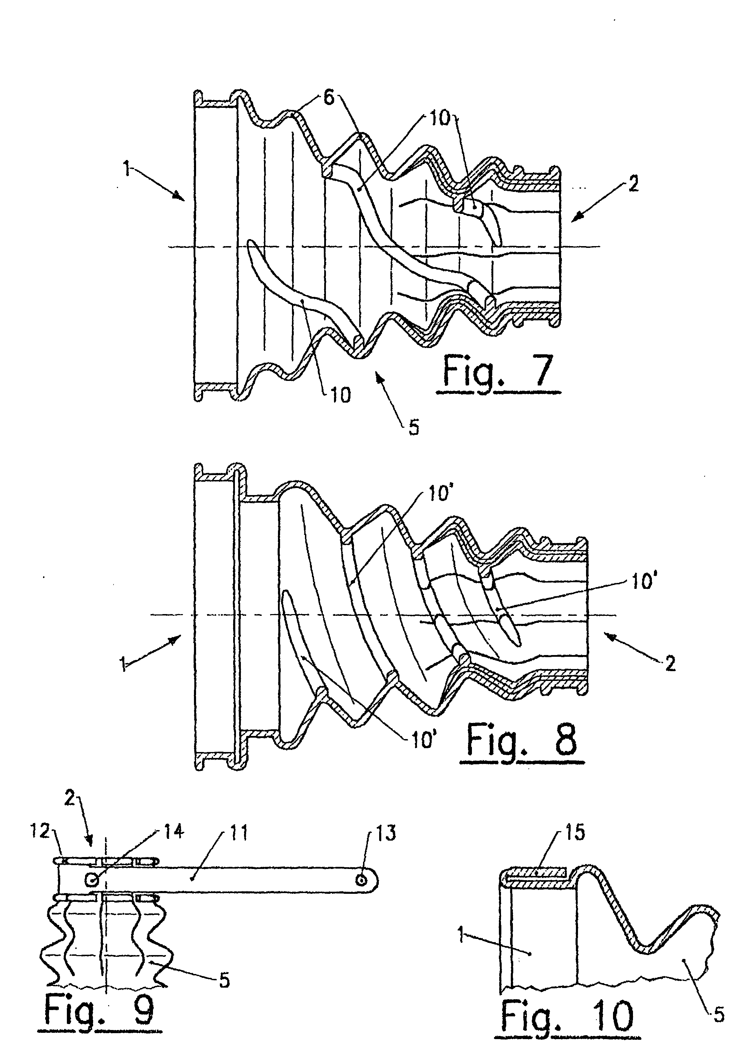

La lubrification des organes de l'articulation 3 du joint peut être améliorée de façon significative au moyen d'une ou plusieurs nervures hélicoïdales 10, 10' internes déterminées de manière à provoquer un mouvement de la matière lubrifiante vers ceux-ci. Sur la figure 7 on peut voir de telles nervures appliquées à un soufflet à ondulations 6 parallèles, ces nervures "chevauchant" celles-ci, alors que sur la figure 8 les ondulations 6' elles-mêmes sont hélicoïdales, les nervures 10' étant disposées sur la face interne du creux de ces ondulations.

La rotation de la transmission, et donc du corps central 5 du soufflet et de la graisse incluse, entraîne cette dernière, sous l'effet de la force centrifuge, à suivre les nervures 10, 10' en direction de l'extrémité de grand diamètre 1. C'est précisément dans cette zone que se trouvent les éléments mécaniques qui ont besoin de graissage (joints, roulements, etc). Cet effet augmente avec la vitesse de rotation.

Comme le montre la figure 8, l'extrémité de grand diamètre 1 peut être de type dit "universel", c'est-à-dire comporter des zones cylindriques de fixations multiples en gradin, permettant d'utiliser une même gaine pour plusieurs joints articulés de dimensions différentes.

Le soufflet comportera avantageusement au moins à l'une de ses extrémités 1, 2, et éventuellement aux deux extrémités, un moyen de serrage intégré en élastomère, moulé en une seule opération avec la gaine, se mettant en place sans outillage et dont la force de serrage est indépendante de la façon d'opérer du monteur assurant la mise en place.

Ce moyen de serrage peut consister en une languette 11 (figure 9) apte à entourer les extrémités cylindriques 1, 2 du soufflet, celles-ci étant éventuellement pourvues de nervures de guidage latérales 12 semblables à celles habituellement utilisées pour les colliers de serrage non intégrés. Les languettes comporteront un moyen de blocage consistant par exemple en une ou plusieurs perforations 13 disposées à l'extrémité, associée à au moins un "bouton" ou rivet 14 solidaire de l'extrémité cylindrique 1, 2, ou en boules ou dispositifs d'arrêt de forme appropriée solidaires de la languette 11, l'ensemble étant agencé de manière à ce que l'extrémité de la languette soit passée sous elle-même pour assurer le blocage.

Le moyen de serrage intégré de l'extrémité de plus grand diamètre 1 peut être constitué d'une bague cylindrique 15 moulée d'une seule pièce avec le soufflet, prolongeant ladite extrémité et déterminée pour pouvoir être rabattue sur celle-ci. La force de serrage peut être adaptée aux besoins en jouant sur l'épaisseur de la bague de serrage 15, et la différence entre les rayons intérieurs de l'extrémité cylindrique 1 et de la bague (figure 10).

Le positionnement des divers éléments constitutifs donne à l'objet de l'invention un maximum d'effets utiles qui n'avaient pas été, à ce jour, obtenus par des dispositifs similaires.

## Revendications

1. Soufflet protecteur pour joint articulé d'arbre de transmission, du type constitué d'une gaine tubulaire conique en élastomère souple, formée d'un corps central (5) avec ondulations permettant la flexion et l'extension axiale, et de deux extrémités (1, 2) avec zones de fixations cylindriques, destiné aux joints articulés lubrifiés de type "cardan" ou homocinétiques utilisés en particulier pour les véhicules routiers automobiles et conçu surtout pour servir de pièce de rechange,
**caractérisé en ce que** l'extrémité de petit diamètre (2) se fixant sur l'arbre d'entraînement (4) du joint articulé est expansible de manière à pouvoir s'étendre radialement sans efforts pour permettre la mise en place du soufflet en passant par-dessus l'articulation du joint articulé sans outillage.

2. Soufflet protecteur selon la revendication 1, se caractérisant par le fait que l'extrémité de petit diamètre (2) présente une section en dents de scie (7) prolongées axialement par des plis (8) aménagés le long d'une partie du corps central (5), la forme desdites dents et desdits plis étant déterminée de façon à ce que la mise en place d'un moyen de serrage tel que collier (9), une fois cette extrémité amenée sur l'arbre d'entraînement (4), fasse se coucher les plis les uns sur les autres et rende l'assemblage étanche.

3. Soufflet protecteur selon l'une quelconque des revendications précédentes, se caractérisant par le fait que le corps central (5) comporte une ou plusieurs nervures hélicoïdales (10, 10') internes aptes à entraîner la graisse contenue dans le dispositif vers l'articulation (3) lorsque la transmission est en rotation.

4. Soufflet protecteur selon la revendication 3, se caractérisant par le fait que le corps central (5) comporte des ondulations (6) parallèles et que les nervures hélicoïdales (10) chevauchent ces ondulations.

5. Soufflet protecteur selon la revendication 3, se caractérisant par le fait que le corps central (5) comporte des ondulations (6') hélicoïdales, les nervures (10') étant disposées sur la face interne du creux desdites ondulations.

6. Soufflet protecteur selon l'une quelconque des revendications précédentes, se caractérisant par le fait que au moins l'une des deux extrémités (1, 2) est pourvue d'un moyen de serrage intégré en élastomère, moulé en une seule opération avec le soufflet, se mettant en place sans outillage et dont la force de serrage est indépendante de la façon d'opérer du monteur assurant la mise en place du dispositif.

7. Soufflet protecteur selon la revendication 6, se caractérisant par le fait que le moyen de serrage intégré est constitué d'une languette (11) apte à entourer l'une des extrémités cylindriques (1, 2) et comportant un moyen de blocage tel qu'une ou plusieurs perforations (13) disposées à l'extrémité et associée à au moins un "bouton" ou rivet (14) solidaire de l'extrémité du soufflet, ou dispositif d'arrêt agencé de manière à ce que l'extrémité de la languette soit passée sous elle-même pour assurer le blocage.

8. Soufflet protecteur selon la revendication 6, se caractérisant par le fait que le moyen de serrage intégré de l'extrémité de plus grand diamètre (1) est constitué d'une bague cylindrique (15) moulée d'une seule pièce avec le soufflet, prolongeant ladite extrémité de plus grand diamètre, et déterminée pour pouvoir être rabattue sur celle-ci.

## Patentansprüche

1. Schutzbalg für Gelenkverbindungen von Antriebswellen bestehend aus einem konischen Tubus aus weichem Elastomer mit einem mittleren, Falten aufweisenden Körper (5), die dessen Biegen und axiale Dehnung zulassen und dessen beide Enden (1,) mit zylindrischen Befestigungszonen versehen sind, der für geschmierte Gelenkverbindungen der Art von Kardangelenken oder homokinetischen Gelenken bestimmt ist, wie sie insbesondere für Straßenfahrzeuge verwendet werden, und der vor allem unter dem Gesichtspunkt, als Ersatzteil zu dienen, konzipiert ist, **gekennzeichnet dadurch, dass** das Ende mit dem kleinen Durchmesser (2), das auf der Antriebswelle (4) der Gelenkverbindung befestigt wird, dehnbar ist und sich ohne Anstrengungen radial aufweiten lässt, so dass der Faltenbalg bei der Montage ohne Werkzeug über das Gelenk geschoben werden kann

2. Schutzbalg gemäß Anspruch 1, **gekennzeichnet dadurch, dass** das Ende mit dem kleinen Durchmesser (2) einen sägezahnförmigen Abschnitt (7) aufweist, dessen Zähne in axialer Richtung durch Falten (8) auf einem Teil des mittleren Körpers (5) verlängert sind, wobei die Form der Zähne und der Falten so festgelegt ist, dass nach dem Aufschieben dieses Endes auf die Antriebswelle (4) eine Klemmeinrichtung, zum Beispiel eine Schelle (9) montiert werden kann, die die Falten aufeinanderlegt und die Verbindung abdichtet.

3. Faltenbalg gemäß einem der vorstehenden Ansprüche, **gekennzeichnet dadurch, dass** der mittlere Körper (5) innen eine oder mehrere spiralförmige Rippen (10, 10') besitzt, die in der Lage sind, das in der Vorrichtung vorhandene Fett zum Gelenk (3) zu transportieren, wenn die Antriebswelle läuft.

4. Schutzbalg gemäß Anspruch 3, **gekennzeichnet dadurch, dass** der mittlere Körper (5) parallele Falten (6) aufweist und die spiralförmigen Rippen (10) über diesen Falten sitzen.

5. Schutzbalg gemäß Anspruch 3, **gekennzeichnet dadurch, dass** der mittlere Körper (5) spiralförmige Falten (6') aufweist und die Rippen (10') auf der Innenseite der Vertiefungen dieser Falten angeordnet sind.

6. Schutzbalg gemäß einem der vorstehenden Ansprüche, **gekennzeichnet dadurch, dass** mindestens eines der beiden Enden (1, 2) mit einer in das Elastomer eingelassenen Klemmeinrichtung versehen ist, die in einem Arbeitsgang mit dem Balg hergestellt wird, ohne Werkzeug montiert wird und deren Klemmkraft von der Arbeitsweise des Mechanikers, der diese Vorrichtung montiert, unabhängig ist.

7. Schutzbalg gemäß Anspruch 6, **gekennzeichnet dadurch, dass** das integrierte Klemmeinrichtung aus einem Band (11) besteht, das eines der zylindrischen Enden (1, 2) umschlingen kann und ein Blockiermittel besitzt, zum Beispiel eines oder mehrere, am Ende angeordnete Löcher (13) und mindestens einen "Knopf" oder einen Niet (14), der mit dem Ende des Balges fest verbunden ist, oder eine Sperrvorrichtung, die so gestaltet ist, dass das Ende des Bandes unter das Band selbst geführt wird, um ein Blockieren zu erreichen.

8. Schutzbalg gemäß Anspruch 6, **gekennzeichnet dadurch, dass** die in das Ende mit dem größeren Durchmesser (1) integrierte Klemmeinrichtung aus einem zylindrischen Ring (15) besteht, der mit dem Balg eine in einem Stück geformte Einheit bildet, und der das Ende mit dem größeren Durchmesser verlängert und dazu bestimmt ist, über dieses Ende umgeschlagen zu werden.

## Claims

1. Protective bellows for driveshaft swivel joint consisting of a flexible elastomer conical tubular sheath, formed of a central body (5) with undulations allowing bending and axial extension, and two ends (1, 2) with cylindrical fixing zones, intended for lubricated "cardan" or homokinetic type swivel joints used in particular for road vehicles and designed especially for use as spare part,
**characterized in that** small diameter end (2) that fixes on driveshaft (4) of the swivel joint can be expanded so as to spread radially without applying force in order to allow the installation of the bellows from above the swivel joint without the use of tooling.

2. Protective bellows according to claim 1, **characterized in that** small diameter end (2) has a sawtooth section (7) extended axially by folds (8) along one part of central body (5), the shape of the said folds being determined so that the means for tightening used such as collar (9), once this end is positioned on driveshaft (4), cause the folds to lie flat one on the other and render the assembly leaktight.

3. Protective bellows according to any one of the previous claims, **characterized in that** central body (5) includes one or several internal helicoidal ribs (10, 10') for driving the grease contained in the device towards swivel joint (3) when the transmission is rotating.

4. Protective bellows according to claim 3, **characterized in that** central body (5) includes parallel undulations (6) and helicoidal ribs (10) across these undulations.

5. Protective bellows according to claim 3, **characterized in that** central body (5) includes of helicoidal undulations (6'), and ribs (10') arranged on the inner face of the troughs of the said undulations.

6. Protective bellows according to any one of the previous claims, **characterized in that** at least one of the two ends (1, 2) is equipped with incorporated elastomer means for tightening, mould cast in a single operation with the bellows, for installation without tooling and whose tightening force is unrelated to the fitter's method for installing the system.

7. Protective bellows according to claim 6, **characterized in that** the incorporated tightening means consist of a tab (11) able to enclose one of cylindrical ends (1, 2) and including blocking means such as one or several perforations (13) arranged at the end and associated with at least one "button" or rivet (14) forming an integral part of the end of the bellows or stop device arranged so that the end of the tab passes under itself to ensure blocking.

8. Protective bellows according to claim 6, **characterized in that** the means incorporated for tightening the large diameter end (1) consist of a cylindrical ring (15) mould cast to form a single part with the bellows, extending the aforementioned largest diameter end, and designed in order to be folded onto it.
